# EUROPEAN PATENT SPECIFICATION

(11) **EP 0 750 415 B1**
(45) Date of publication and mention of the grant of the patent: **16.04.2003**
(21) Application number: 96304563.8
(22) Date of filing: 19.06.1996
(51) Int. Cl.: H04N 1/047, G06T 3/00

(54) **Image processing method and apparatus**
Bildverarbeitungsverfahren und Gerät
Méthode et appareil de traitement d'image

(30) Priority: 20.06.1995 JP 15331295
(43) Date of publication of application: 27.12.1996
(73) Proprietor: CANON KABUSHIKI KAISHA, Tokyo (JP)
(72) Inventor: Ikeda, Hiroaki, c/o Canon K.K., Ohta-ku, Tokyo (JP); Niki, Toru, c/o Canon K.K., Ohta-ku, Tokyo (JP)
(74) Representative: Beresford, Keith Denis Lewis

(56) References cited:
- EP-A- 0 287 027
- DE-A- 4 311 172
- US-A- 4 251 799
- US-A- 5 101 448
- US-A- 5 140 647
- US-A- 5 228 095

## Description

The invention relates to image processing method and apparatus for detecting (and preferably correcting) the degree of tilt of an input document image or the like.

The image processing method and apparatus may be used for editing an input image to make it suitable for extracting characters.

Hitherto, when an input image in an image processing apparatus is rotated, a rotational angle is designated and the image is rotated by the designated angle. Alternatively, a straight line is drawn on a displayed image by using a mouse or the like and the image is rotated by an angle such that the straight line is horizontal or vertical. In any one of the above methods, the rotational angle is input by the user.

In order to make the above processes unnecessary or to process an image using an apparatus without such a function, when the image is input, at a time when an original is presented to a scanner, careful attention has to be paid so as not to skew the original document.

In the above known apparatus, however, when most of the area of the input image is text, it is particularly desirable that a line is horizontal or vertical. In order to correct a tilt, the operation for the user to instruct a rotational amount is always necessary. There is a drawback such that it becomes a burden for the operator.

DE-A-4311172 (and US 5452374) proposes a method and apparatus for correcting the skew of a document image which is implemented as part of a document segmentation system for optical character recognition. Pixel data from a scanner is compressed by combining the data of four adjacent rows and in each row combining the data of four adjacent pixels, and then run length data is extracted from the compressed scan lines. As the run lengths are extracted, two-dimensional rectangles are created according to the limits of contiguous black pixels in both the horizontal and vertical directions, and the rectangles are analysed to classify each one as one of a vertical line, a horizontal line, a picture image or text. The text rectangles are analysed to identify text columns, and the skew angle is detected for pairs of rectangles which are in the same column and suitably far apart. The skew angle is the angle between the horizontal and a line joining corresponding corners (for example the bottom right corners) of a pair of rectangles. A histogram is made of skew angles, and the peak histogram value is used to identify the skew angle of the document.

US-A-4251799 proposes an optical character recognition system which detects the base line of a scanned row of characters. The linear array of a scanner passes along a line of text with a scanner portion designated as a base line searching window positioned so that the base line of the text falls within the window. A series of pixel density histograms are made, for example each histogram being made from a string of ten characters along the scanned line of text. A pixel density peak value in the lower portion of each histogram is identified as the base line of the text in the character string used to generate the histogram. Because this base line information is available for every group of ten characters along the row of text, the base line location is available at multiple positions along the row and accordingly the skew of the base line can be determined.

The present invention provides image processing methods as set out in claim 1 and claim 2, image processing apparatus as set out in claim 16 and claim 17, a storage medium as set out in claim 31, and a computer program set out in claim 32. Optional features are set out in the remaining claims.

An embodiment of the invention allows the tilt of the input original to be accurately detected without intervention by the user.

In an embodiment of the invention, an image processing method and apparatus can eliminate the tilt of an image at high speed by shifting strips of a width obtained from a tilt amount.

By correcting the tilt of the input image information in accordance with the detected tilt amount, image information can be obtained whose tilt has been corrected in accordance with a tilt of the input image, without intervention by the user.

An embodiment uses two partial image areas at each of a plurality of positions of the image information, allowing the tilt amount to be detected more accurately.

Preferably the process detects the tilt amounts at the plurality of positions.

In certain embodiments, when it is judged that an extent of the projection which is obtained from the partial image area is insufficient, the process to obtain a tilt amount is interrupted, so that an unnecessary process at a location which is unsuitable for detection of the tilt amount can be avoided, and the processes can be efficiently executed.

In certain embodiments, the maximum value and the minimum value of the correlation between the projections are obtained and when the difference between the maximum and minimum values is small, interrupting the process to obtain a tilt amount is interrupted, so that an unnecessary process at a location which is unsuitable for detection of the tilt amount can be avoided, and the processes can be efficiently executed.

By displaying the corrected image information on display means, an image of a high quality in which the tilt was corrected can be confirmed on a display.

By printing the corrected image information by printing means, a recording medium on which an image of a high quality in which the tilt had been corrected was printed can be obtained.

By registering the corrected image information into an electronic file, an image of a high quality can be stored electronically in order to preserve the images.

By recognizing the corrected image information, a high quality image can be provided for a recognizing process in order to obtain a high recognition ratio.

In certain embodiments, for the correction of the image mentioned above, a division width of the image is determined in accordance with the detected tilt amount, the image is divided into a plurality of small areas of the decided division width, and the image is corrected by forming images obtained by shifting each of the plurality of divided small areas, so that a correcting process of the image that is suitable for the tilt of the image can be executed.

In particular embodiments, for the division of the image into the small areas, the image is divided in each of the horizontal and vertical directions, and as for the formation of the images, a shifting process is executed on the resulting small areas in both of the horizontal and vertical directions, so that the image whose tilt was corrected at a higher quality can be formed.

### BRIEF DESCRIPTION OF THE DRAWINGS

Fig. 1 is a block diagram of an image processing apparatus according to the first embodiment;
Fig. 2 is a flowchart for processes which are executed by the image processing apparatus according to the first embodiment;
Fig. 3 is a diagram for explaining an input image according to the first embodiment;
Fig. 4 is a diagram for explaining an output image according to the first embodiment;
Fig. 5 is a flowchart for a process to obtain a tilt amount which is executed by the image processing apparatus according to the first embodiment;
Fig. 6 is a diagram for explaining a process for obtaining a tilt amount according to the first embodiment;
Fig. 7 is a flowchart for a process to eliminate a tilt of an image which is executed by an image processing apparatus according to the second embodiment; and
Figs. 8A, 8B, and 8C are diagrams for explaining a process to eliminate the tilt according to the second embodiment.

### DETAILED DESCRIPTION OF THE PREFERRED EMBODIMENTS

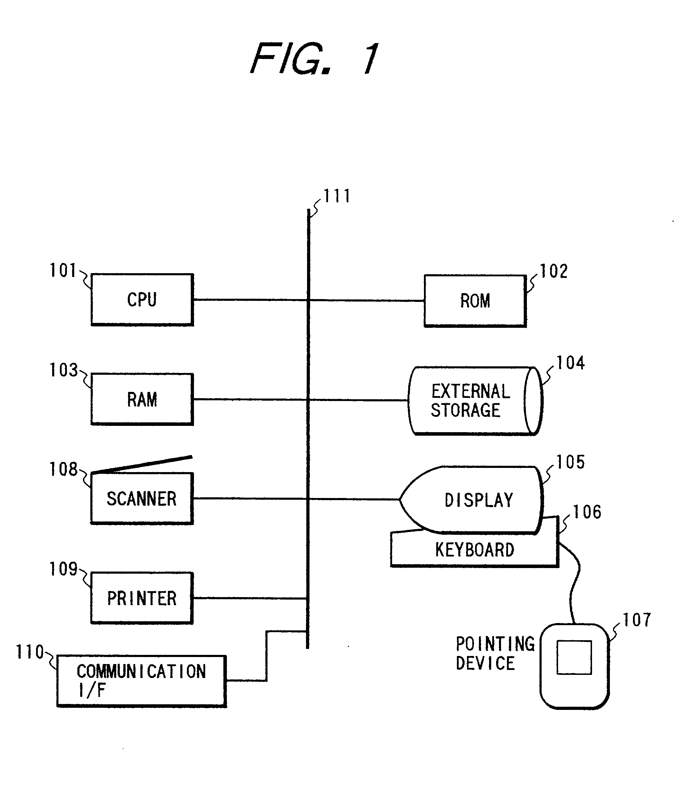

Fig. 1 is a block diagram showing a construction of an image processing apparatus for embodying the invention. Reference numeral 101 denotes a CPU for controlling the whole apparatus in accordance with a control program stored in an ROM 102; 102 denotes the ROM for storing a control program or the like of the apparatus such as processes which are executed by the CPU 101 and are shown in flowcharts, which will be explained hereinlater; 103 denotes an RAM to store a document image or the like; 104 denotes an external storage such as a magnetic disk or the like; 105 denotes a display; 106 denotes a keyboard; 107 denotes a pointing device such as a mouse or the like; and 108 denotes an image scanner to read an image; 109 denotes a printer; and 110 denotes a communication interface.

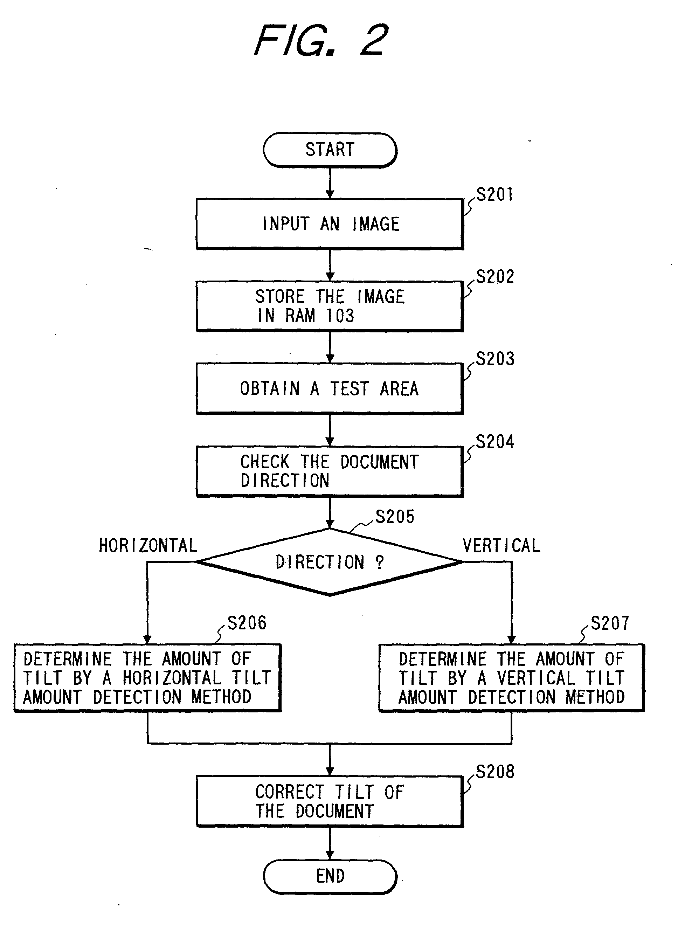

Processes in the embodiment which are executed by the image processing apparatus with the construction shown in Fig. 1 will now be described with reference to the flowchart of Fig. 2.

First in step S201, an image which was optically read from the image scanner 108 or the like is input. The input image is stored into the RAM 103 in step S202. The input image can be also displayed on the display 105.

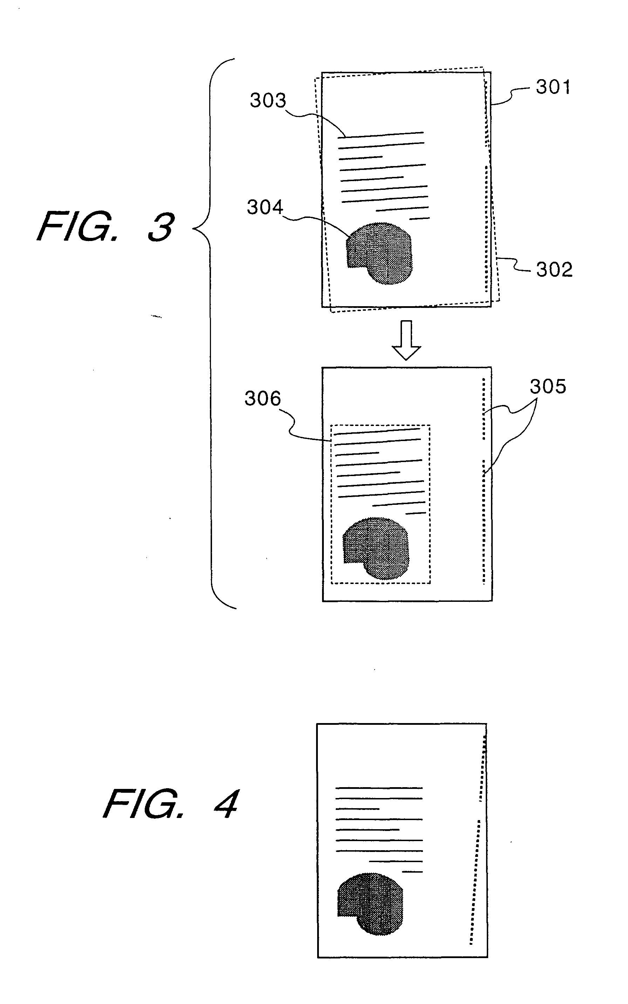

In step S203, in order to obtain a tilt amount of text in the input image, a test area is obtained in the input image. An example of a test area obtaining process in step S203 will now be described with reference to Fig. 3. A rectangle 301 of a solid line shows the area of the input image. A rectangle 302 of a broken line shows the area of a tilted original. A text portion 303, a halftone portion 304, and noises 305 exist in the input image. In the image, a desired portion is the text portion. This exists in the left slightly lower portion of the input image. Since an unwanted image such as noises or the like exists in the peripheral portion in many cases, a reduced rectangle is initially defined, which is spaced in from the periphery of the input image 301 by a predetermined distance. A circumscribed rectangle of the image is obtained as a processing target, for which the reduced rectangle is the maximum size. By further obtaining a histogram from the image included in the circumscribed rectangle, an area 306 is derived shown by the rectangle of the broken line and this is identified as a test area.

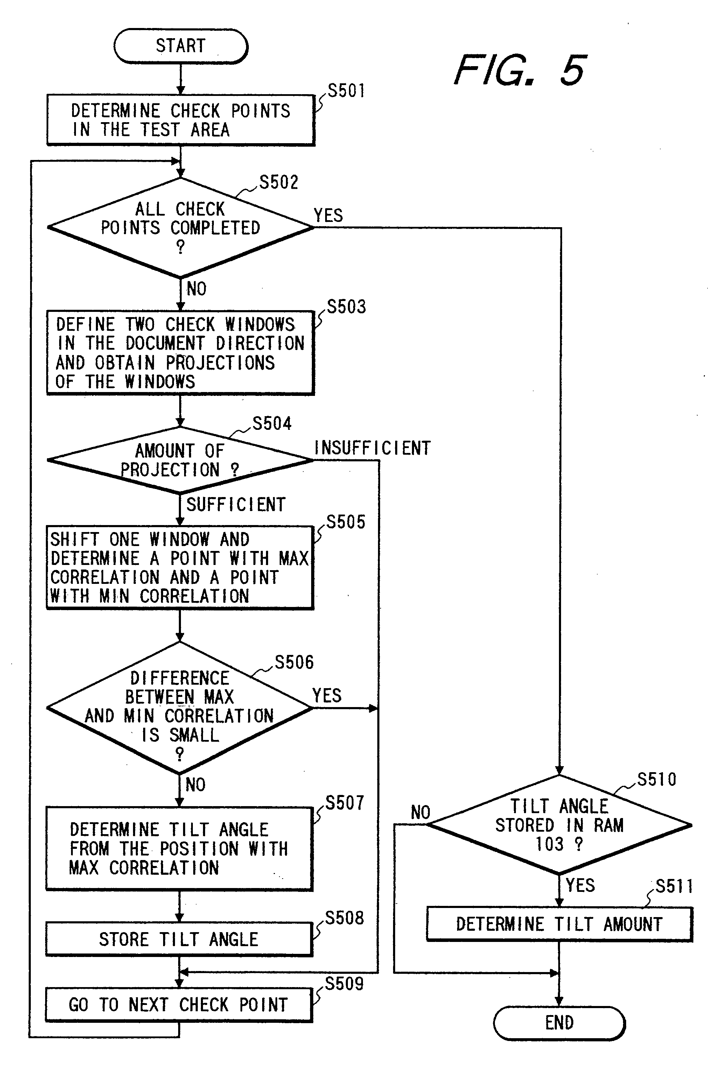

By analyzing the image in the test area thus obtained, a document direction in the test area is judged (S204). The document direction is judged by a well-known method such as a method of using a tendency such that when the text image is thinned out or is subjected to a thickening process, pixels are coupled in the typesetting direction of the text, or the like. Even when a diagram, halftone, or the like is present with text, or vertical characters and horizontal characters are both present, the document direction is decided from a rough tendency. Thus, with respect to the area which was judged such that the document direction is horizontal in step S205, the processing routine advances to step S206. A tilt amount is obtained by a horizontal tilt amount detecting method. With regard to the area which was judged such that the document direction is vertical in step S205, the processing routine advances to step S207 and the tilt amount is obtained by a vertical tilt amount detecting method. The details of the tilt amount detecting processes which are executed in steps S206 and S207 will now be described hereinbelow with reference to the flowchart of Fig. 5.

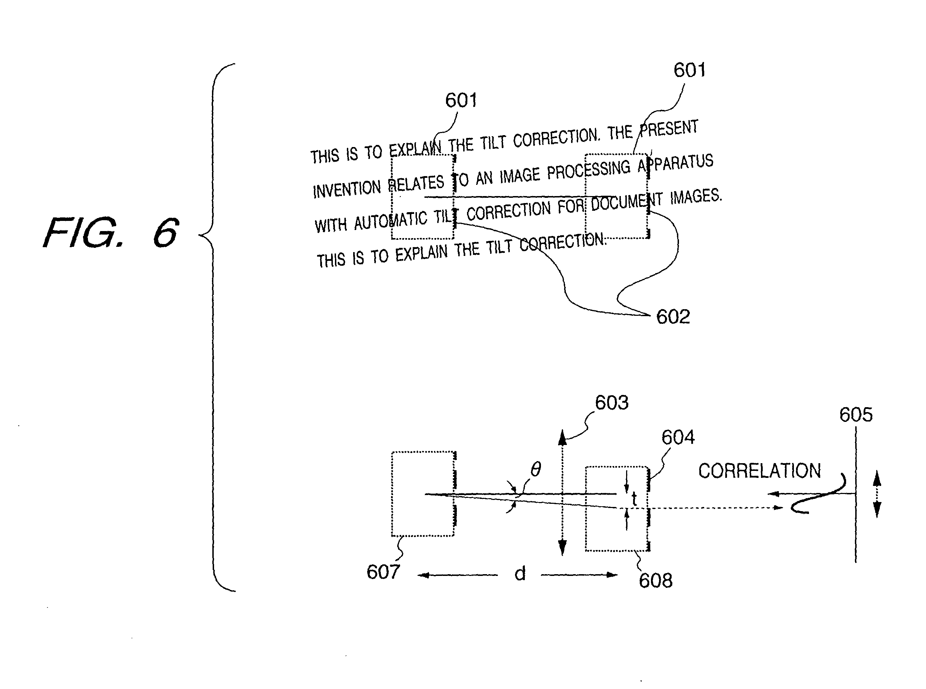

First in step S501, check points to check the tilt amount are determined so as to be distributed over a plurality of locations in the test area obtained in step S203, e.g. so as to be distributed over as near to the whole test area as possible. The check points can be determined at regular intervals or can be also decided by using random numbers or the like. In step S502, with respect to all of the decided check points, the following checks are individually executed. In step S503, two check windows are defined in a target test area, spaced from each other in the document typesetting direction of the test area judged in step S205 and their projections are obtained. This situation is shown in Fig. 6 in the case of a document with horizontal text as an example. Reference numeral 601 denotes two check windows as a pair and their projections are shown at 602. In the example of Fig. 6, since the text is horizontal, the check windows are spaced in the horizontal direction. In case of a document with vertical text, the check windows are vertically spaced. In step S504, if either one of the two check windows does not have a projection, or its projection is not sufficient, the process at such this check point is finished and the processing routine advances to step S509. The next check point is searched.

In step S505, subsequently, while one check window is shifted in the direction normal to the document typesetting direction in a predetermined tilt amount range, a correlation of the projections of the two check windows is obtained. A point at which the correlation value is maximum and the point at which the correlation value is minimum are detected. In Fig. 6, a left check window 607 is fixed and a right check window 608 is shifted in the vertical direction normal to the horizontal document typesetting direction, within a range 603. The amount of coincidence is detected as a correlation, from the extent to which the projections line up in both of the check windows and the absences of projection line up in both of the check windows. A detected value of such a correlation is shown at 605. When the right check window is at position 604, the correlation between the projections of the two windows is maximum. When it is judged in step S506 that the difference between the maximum and minimum values of the correlation is small, it is regarded that the windows are not a part of the image of the line whose projection could correctly be extracted. The process of this check point is finished and the processing routine advances to step S509. The next check point is searched.

In step S507, the tilt angle of the text image of the original is obtained from the shift angle of the point of the maximum correlation. In Fig. 6, the projection when the right check window is shifted downward by t shows the maximum correlation. Now, assuming that the interval of the check windows is equal to d and a tilt angle of the document image is equal to θ, it is possible to judge that the document image is tilted in the right upward direction by the angle θ which is expressed by tanθ = t/d. In step S508, the tilt angle obtained is stored into the RAM 103 or the like.

Since the processes for one check point have been finished in this manner, in step S509, the processing routine goes to the next check point. When it is judged in step S502 that the processes for all of the check points have been finished, step S510 follows. When the tilt angle has been stored in the RAM 103, a tilt amount of the input image is determined in accordance with the tilt angle (S511). As a tilt amount that is determined in step S511, it is possible to use an average of the tilt angles stored in the RAM 103 in step S508, a center value of the distribution, or the like. When it is judged in step S510 that there is no tilt angle stored, it is judged that the tilt amount of the input original is not obtained. The tilt detecting process of the original is finished. With respect to the vertical document as well, a tilt amount can be obtained in a manner similar to the processes shown in the flowchart of Fig. 5 like a horizontal document shown in Fig. 6.

When the tilt amounts are obtained in steps S206 and S207, the input image is deformed so as to eliminate the tilt of the original in step S208, As for the modification, it is sufficient to rotate the image by the tilt amount obtained in step S511 around the center of gravity of the input original as a rotational center. Thus, from the input image of Fig. 3, an image in which the tilt of the document portion was eliminated is obtained as shown in Fig. 4.

As described above, according to the embodiment, by eliminating the peripheral portion of the input image from a target to obtain the test area, there is an effect of a decrease in noises included in the test area. By allowing a plurality of check points to exist in the whole test area and by using the tilt angles of check points at which the tilt angle can be obtained with a high reliability, there is an effect such that the tilt amount can be accurately obtained from the text area existing in a part of the input original. Further, there is an effect such that even if the test area is not a text image and a line in the same direction as the typesetting direction like a ruled line is included, the tilt angle can be correctly obtained.

Although the above embodiment has been described with a particular arrangement of components for embodying the invention, it is also possible to construct embodiments in other manners, for example such that data such as a program for executing processes to embody the invention or the like is provided to a general computer from the outside or such data is stored in the external storage 104 and is previously stored into the RAM 103. It is also possible to construct in a manner such as to process input images which have previously been stored in the external storage 104. The method of correlation of the projections is also not limited to that in the embodiment.

The image whose tilt was eliminated and corrected in step S208 is displayed by the display 105, is printed by the printer 109, or is transmitted to an external apparatus by the communication I/F 110. Or, the corrected image is used by the image processing apparatus for the subsequent processes such as registration to an electronic file in which a high quality image is required because the preservation is an object, character recognizing process in which a high quality image is required in order to obtain a high recognition ratio, and the like.

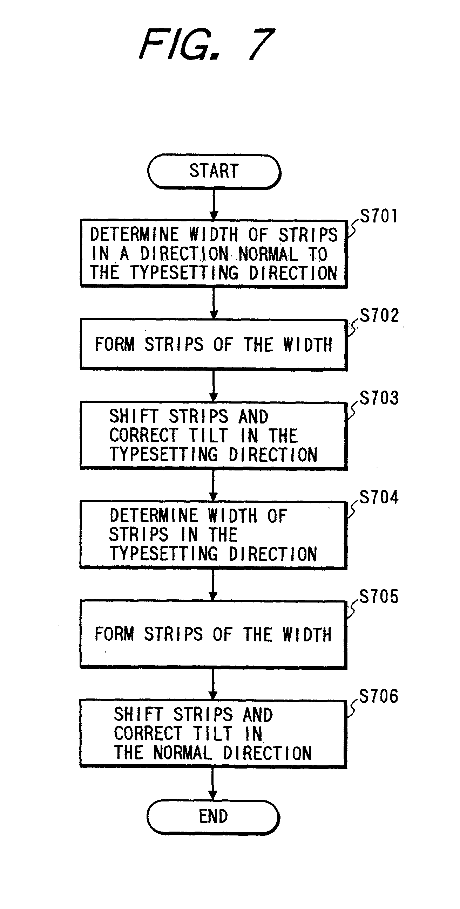

An example of a process to eliminate the tilt of the image in step S208 in the embodiment will now be described with reference to the flowchart of Fig. 7.

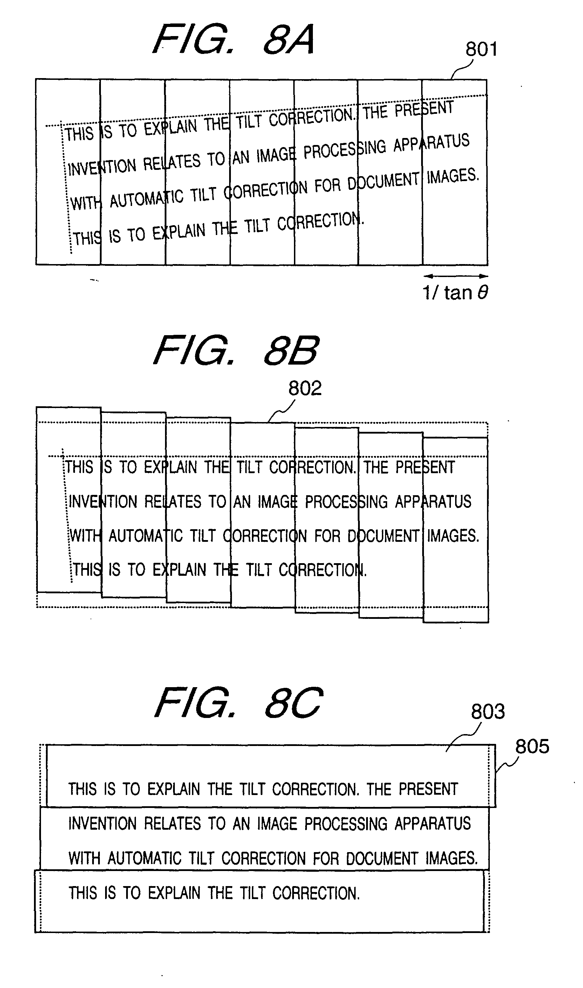

In step S701, the input image is to be cut in the direction normal to the typesetting direction and the width of the strips (shown at 801 in Fig. 8A) is determined. It is sufficient to set the width to 1/tanθ pixels. By using the width determined in step S701, a plurality of strips are formed in the direction normal to the typesetting direction at regular intervals as shown in Fig. 8A (S702). In this instance, the strips are formed symmetrically with respect to the center of gravity of the input image.

In step S703, a strip 802 including the center of gravity of the input image is used as a reference and as shown in Fig. 8B, each strip other than the strip 802 is shifted by one pixel relative to its neighbours, thereby eliminating and correcting the tilt in the typesetting direction.

Similarly, the width of strips extending in the typesetting direction is obtained in step S704. Strips in the typesetting direction (805 in Fig. 8C) are formed in step S705. Those strips are each shifted by one pixel relative to its neighbours, thereby eliminating and correcting the tilt in the direction normal to the typesetting direction. The width of the strips can be set to 1/tanθ pixels. By the above processes, an image 803 whose tilt was corrected can be obtained.

As described above, according to the embodiment, by shifting strips of a width obtained by the tilt amount, the tilt of the image can be eliminated and corrected at a high speed.

## Claims

1. An image processing method wherein steps performed by image processing apparatus comprise:
defining (S503) two partial image areas (607,608) in an input image such that the partial image areas are spaced apart in a horizontal direction by an interval (d);
**characterised by**:
detecting the vertical shift amount (t) of one of the partial image areas (608) relative to the other (607) at which a correlation of respective horizontal projections of pixels within the respective partial image areas is maximum, the correlation indicating the degree of coincidence of the respective horizontal projections, and each horizontal projection indicating the vertical positions within the partial image area at which black pixels exist; and
obtaining (S507) a tilt angle (θ) of said input image in accordance with the shift amount and the interval.

2. An image processing method wherein steps performed by image processing apparatus comprise:
defining (S503) two partial image areas (607,608) in an input image such that the partial image areas are spaced apart in a vertical direction by an interval (d);
**characterised by**:
detecting the horizontal shift amount (t) of one of the partial image areas (608) relative to the other (607) at which a correlation of respective vertical projections of pixels within the respective partial image areas is maximum, the correlation indicating the degree of coincidence of the respective vertical projections, and each vertical projection indicating the horizontal positions within the partial image area at which black pixels exist; and
obtaining (S507) a tilt angle (θ) of said input image in accordance with the shift amount and the interval.

3. A method according to any preceding claim, wherein said defining step defines partial image areas at a respective plurality of locations in the input image, said detecting step detects the shift amount for each pair of the defined partial image areas, and said obtaining step obtains the tilt angle for each pair of the defined partial image areas.

4. A method according to claim 3, further comprising the step of determining (S511) tilt amount in accordance with the obtained tilt angles.

5. A method according to any preceding claim, wherein the correlation of the projections of the partial image areas is determined for shift amounts within a predetermined range (603).

6. A method according to any preceding claim, including the step of judging (S504) whether the extent of the projection of at least one of the partial image areas is sufficient, and interrupting the detecting step and the obtaining step if the extent of the projection is judged not to be sufficient.

7. A method according to any of the preceding claims, wherein a maximum value and a minimum value of the correlation of said projections are obtained (S505) and when the difference between said maximum and minimum values is determined (S506) to be too small, the obtaining step is interrupted.

8. A method according to any of the preceding claims, further comprising the step of correcting (S208) the tilt of said input image in accordance with said obtained tilt angle.

9. A method according to claim 8, wherein said corrected image is displayed on a display means (105).

10. A method according to claim 8, wherein said corrected image data is printed by a printing means (109).

11. A method according to claim 8, wherein said corrected image data is written to an electronic file.

12. A method according to claim 8, including the step of applying recognition processing to the corrected image.

13. A method according to claim 8, wherein said correcting step comprises,
deciding (S701) a division width of the image in accordance with said detected tilt angle (θ),
dividing (S702) said image into a plurality of portions having said decided division width in one of the horizontal and vertical directions, and
forming (S703) the corrected image by recombining the portions of the image such that the portions are shifted in the other of the horizontal and vertical directions.

14. A method according to claim 13, wherein:
the step of dividing said image into said portions comprises dividing the image in each of the horizontal and vertical directions, and wherein in the forming step,
the shifting of the portions is executed in both of the horizontal and vertical directions.

15. A method according to claim 13 or claim 14 in which the division width is 1/tan θ pixels, and adjacent said portions are shifted relative to each other by 1 pixel.

16. An image processing apparatus (101-110) comprising:
means (101) for defining (S503) two partial image areas (607, 608) in an input image such that the partial image areas are spaced apart in a horizontal direction by an interval (d);
**characterised by**:
detecting means for detecting the vertical shift amount (t) of one of the partial image areas (608) relative to the other (607) at which a correlation of respective horizontal projections of pixels within the respective partial image areas is maximum, the correlation indicating the degree of coincidence of the respective horizontal projections, and each horizontal projection indicating the vertical positions within the partial image area at which black pixels exist; and
obtaining means for obtaining (S507) a tilt angle (θ) of said input image in accordance with the shift amount and the interval.

17. An image processing apparatus (101-110) comprising:
means (101) for defining (S503) two partial image areas (607, 608) in an input image such that the partial image areas are spaced apart in a vertical direction by an interval (d);
**characterised by**:
detecting means for detecting the horizontal shift amount (t) of one of the partial image areas (608) relative to the other (607) at which a correlation of respective vertical projections of pixels within the respective partial image areas is maximum, the correlation indicating the degree of coincidence of the respective vertical projections, and each vertical projection indicating the horizontal positions within the partial image area at which black pixels exist; and
obtaining means for obtaining (S507) a tilt angle (θ) of said input image in accordance with the shift amount and the interval.

18. Apparatus according to claims 16 or 17 wherein said defining means is operable to define partial image areas at a respective plurality of locations in the input image, said detecting means being operable to detect the shift amount for each pair of the defined partial image areas, and said obtaining means being operable to obtain the tilt angle for each pair of the defined partial image areas.

19. Apparatus according to claim 18, further comprising means for determining (S511) tilt amount in accordance with the obtained tilt angles.

20. Apparatus according to any of claims 16 to 19 comprising means for setting a predetermined range (603) of shift amounts within which the correlation of the projections of the partial image areas is determined.

21. Apparatus according to any of claims 16 to 20, including judging means for judging (S504) whether the extent of the projection of at least one of the partial image areas is sufficient, and interrupting means for interrupting the operation of the detecting means and the obtaining means if the extent of the projection is judged not to be sufficient.

22. Apparatus according to any of claims 16 to 21, wherein the interrupting means is operable to obtain a maximum value and a minimum value of the correlation of said projections and to interrupt the obtaining of the tilt angle when the difference between said maximum and minimum values is determined (S506) to be too small.

23. Apparatus according to any of claims 16 to 22, further comprising correcting means for correcting (S208) the tilt of said input image in accordance with said obtained tilt angle.

24. Apparatus according to claim 23 comprising display means (105) for displaying the corrected image.

25. Apparatus according to claim 23 comprising printing means (109) for printing the corrected image.

26. Apparatus according to claim 23 comprising an electronic filing means for storing the corrected image data.

27. Apparatus according to claim 23, including recognition means for applying recognition processing to the corrected image.

28. Apparatus according to claim 23, wherein said correction means comprises,
deciding means for deciding (S701) a division width of the image in accordance with said detected tilt angle (θ),
dividing means for dividing (S702) said image into a plurality of portions having said decided division width in one of the horizontal and vertical directions,
forming means for forming the corrected image by recombining the portions of the image such that the portions are shifted in the other of the horizontal and vertical direction.

29. Apparatus according to claim 28, wherein:
dividing means is operable to divide the image in each of the horizontal and vertical directions, and wherein the forming means is operable to shift the portions is executed in both of the horizontal and vertical directions.

30. Apparatus according to claim 28 or claim 29 in which the deciding means decides the width to be 1/tan θ pixels, and the forming means forms the corrected image with adjacent said portions shifted relative to each other by 1 pixel.

31. A storage medium storing a program which instructs a processor to carry out each of the steps of the method claimed in any of claims 1 to 15.

32. A computer program which instructs a processor to carry out each of the steps of the method claimed in any one of claims 1 to 15.

## Patentansprüche

1. Bildverarbeitungsverfahren, bei dem von einer Bildverarbeitungsvorrichtung durchgeführte Schritte umfassen:
Definieren (S503) von zwei Teilbildbereichen (607, 608) in einem Eingabebild derart, dass die Teilbildbereiche in einer horizontalen Richtung durch einen Abstand (d) voneinander beabstandet sind;
**gekennzeichnet durch:**
Erfassen des vertikalen Verschiebungsbetrags (t) von einem der Teilbildbereiche (608) relativ zu dem anderen (607), bei dem eine Korrelation von jeweiligen horizontalen Projektionen von Bildelementen innerhalb der jeweiligen Teilbildbereiche maximal ist, wobei die Korrelation den Grad der Übereinstimmung der jeweiligen horizontalen Projektionen angibt, und jede horizontale Projektion die vertikalen Positionen innerhalb des Teilbildbereichs angibt, an denen schwarze Bildelemente vorhanden sind; und
Gewinnen (S507) eines Neigungswinkels (θ) des Eingabebildes gemäß dem Verschiebungsbetrag und dem Abstand.

2. Bildverarbeitungsverfahren, bei dem von einer Bildverarbeitungsvorrichtung durchgeführte Schritte umfassen:
Definieren (S503) von zwei Teilbildbereichen (607, 608) in einem Eingabebild derart, dass die Teilbildbereiche in einer vertikalen Richtung durch einen Abstand (d) voneinander beabstandet sind;
**gekennzeichnet durch:**
Erfassen des horizontalen Verschiebungsbetrags (t) von einem der Teilbildbereiche (608) relativ zu dem anderen (607), bei dem eine Korrelation von jeweiligen vertikalen Projektionen von Bildelementen innerhalb der jeweiligen Teilbildbereiche maximal ist, wobei die Korrelation den Grad der Übereinstimmung der jeweiligen vertikalen Projektionen angibt, und jede vertikale Projektion die horizontalen Positionen innerhalb des Teilbildbereichs angibt, an denen schwarze Bildelemente vorhanden sind; und
Gewinnen (S507) eines Neigungswinkels (θ) des Eingabebildes gemäß dem Verschiebungsbetrag und dem Abstand.

3. Verfahren nach einem der vorangehenden Ansprüche, wobei der Definitionsschritt Teilbildbereiche an einer jeweiligen Vielzahl von Orten in dem Eingabebild definiert, der Erfassungsschritt für jedes Paar der definierten Teilbildbereiche den Verschiebungsbetrag erfasst, und der Gewinnungsschritt für jedes Paar der definierten Teilbildbereiche den Neigungswinkel gewinnt.

4. Verfahren nach Anspruch 3, zudem mit dem Schritt zum Bestimmen (S511) eines Neigungsbetrages gemäß den gewonnenen Neigungswinkeln.

5. Verfahren nach einem der vorangehenden Ansprüche, wobei die Korrelation der Projektionen der Teilbildbereiche für Verschiebungsbeträge innerhalb einer vorbestimmten Spanne (603) bestimmt wird.

6. Verfahren nach einem der vorangehenden Ansprüche, mit dem Schritt zum Beurteilen (S504), ob das Ausmaß der Projektion von zumindest einem der Teilbildbereiche ausreichend ist, und Unterbrechen des Erfassungsschritts und des Gewinnungsschritts, wenn das Ausmaß der Projektion als nicht ausreichend beurteilt wird.

7. Verfahren nach einem der vorangehenden Ansprüche, wobei ein Maximumwert und ein Minimumwert der Korrelation der Projektionen gewonnen werden (S505) und der Gewinnungsschritt unterbrochen wird, wenn bestimmt wird, dass der Unterschied zwischen dem Maximum- und Minimumwert zu klein ist (S506).

8. Verfahren nach einem der vorangehenden Ansprüche, zudem mit dem Schritt zum Korrigieren (S208) der Neigung des Eingabebildes gemäß dem gewonnenen Neigungswinkel.

9. Verfahren nach Anspruch 8, wobei das korrigierte Bild auf einer Anzeigeinrichtung (105) angezeigt wird.

10. Verfahren nach Anspruch 8, wobei die korrigierten Bilddaten von einer Druckeinrichtung (109) gedruckt werden.

11. Verfahren nach Anspruch 8, wobei die korrigierten Bilddaten in eine elektronische Datei geschrieben werden.

12. Verfahren nach Anspruch 8, mit dem Schritt zum Anwenden einer Erkennungsverarbeitung auf das korrigierte Bild.

13. Verfahren nach Anspruch 8, wobei der Korrekturschritt umfasst,
Entscheiden (S701) einer Teilungsbreite des Bildes gemäß dem erfassten Neigungswinkel (θ),
Teilen (S702) des Bildes in eine Vielzahl von Abschnitten, die in einer der horizontalen oder der vertikalen Richtung die entschiedene Teilungsbreite aufweisen, und
Erzeugen (S703) des korrigierten Bildes durch Wiederverbinden der Abschnitte des Bildes derart, dass die Abschnitte in die andere der horizontalen oder der vertikalen Richtung verschoben werden.

14. Verfahren nach Anspruch 13, wobei:
der Schritt zum Teilen des Bildes in die Abschnitte ein Teilen des Bildes in sowohl der horizontalen als auch der vertikalen Richtung umfasst, und wobei bei dem Erzeugungsschritt,
das Verschieben der Abschnitte sowohl in der horizontalen als auch in der vertikalen Richtung ausgeführt wird.

15. Verfahren nach Anspruch 13 oder Anspruch 14, bei dem die Teilungsbreite 1/tanθ - Bildelemente beträgt und die benachbarten Abschnitte relativ zueinander um 1 Bildelement verschoben werden.

16. Bildverarbeitungsvorrichtung (101-110) mit:
einer Einrichtung (101) zur Definition (S503) von zwei Teilbildbereichen (607, 608) in einem Eingabebild derart, dass die Teilbildbereiche in einer horizontalen Richtung durch einen Abstand (d) voneinander beabstandet sind;
**gekennzeichnet durch:**
eine Erfassungseinrichtung zur Erfassung des vertikalen Verschiebungsbetrags (t) von einem der Teilbildbereiche (608) relativ zu dem anderen (607), bei dem eine Korrelation von jeweiligen horizontalen Projektionen von Bildelementen innerhalb der jeweiligen Teilbildbereiche maximal ist, wobei die Korrelation den Grad der Übereinstimmung der jeweiligen horizontalen Projektionen angibt, und jede horizontale Projektion die vertikalen Positionen innerhalb des Teilbildbereichs angibt, an denen schwarze Bildelemente vorhanden sind; und
eine Gewinnungseinrichtung zur Gewinnung (S507) eines Neigungswinkels (θ) des Eingabebildes gemäß dem Verschiebungsbetrag und dem Abstand.

17. Bildverarbeitungsvorrichtung (101-110), mit:
einer Einrichtung (101) zur Definition (S503) von zwei Teilbildbereichen (607, 608) in einem Eingabebild derart, dass die Teilbildbereiche in einer vertikalen Richtung durch einen Abstand (d) voneinander beabstandet sind;
**gekennzeichnet durch:**
eine Erfassungseinrichtung zur Erfassung des horizontalen Verschiebungsbetrags (t) von einem der Teilbildbereiche (608) relativ zu dem anderen (607), bei dem eine Korrelation von jeweiligen vertikalen Projektionen von Bildelementen innerhalb der jeweiligen Teilbildbereiche maximal ist, wobei die Korrelation den Grad der Übereinstimmung der jeweiligen vertikalen Projektionen angibt, und jede vertikale Projektion die horizontalen Positionen innerhalb des Teilbildbereichs angibt, an denen schwarze Bildelemente vorhanden sind; und
eine Gewinnungseinrichtung zur Gewinnung (S507) eines Neigungswinkels (θ) des Eingabebildes gemäß dem Verschiebungsbetrag und dem Abstand.

18. Vorrichtung nach Anspruch 16 oder 17, wobei die Definitionseinrichtung betreibbar ist, um Teilbildbereiche an einer jeweiligen Vielzahl von Orten in dem Eingabebild zu definieren, die Erfassungseinrichtung betreibbar ist, um für jedes Paar der definierten Teilbildbereiche den Verschiebungsbetrag zu erfassen, und die Gewinnungseinrichtung betreibbar ist, um für jedes Paar der definierten Teilbildbereiche den Neigungswinkel zu gewinnen.

19. Vorrichtung nach Anspruch 18, zudem mit einer Einrichtung zur Bestimmung (S511) eines Neigungsbetrages gemäß den gewonnenen Neigungswinkeln.

20. Vorrichtung nach einem der Ansprüche 16 bis 19, mit einer Einrichtung zur Einstellung einer vorbestimmten Spanne (603) von Verschiebungsbeträgen, innerhalb der die Korrelation der Projektionen der Teilbildbereiche bestimmt wird.

21. Vorrichtung nach einem der Ansprüche 16 bis 20, mit einer Beurteilungseinrichtung zur Beurteilung (S504), ob die Ausdehnung der Projektion von zumindest einem der Teilbildbereiche ausreichend ist, und einer Unterbrechungseinrichtung zur Unterbrechung des Betriebs der Erfassungseinrichtung und der Gewinnungseinrichtung, wenn die Ausdehnung der Projektion als nicht ausreichend beurteilt wird.

22. Vorrichtung nach einem der Ansprüche 16 bis 21, wobei die Unterbrechungseinrichtung betreibbar ist, um einen Maximumwert und einen Minimumwert der Korrelation der Projektionen zu gewinnen, und um das Gewinnen des Neigungswinkels zu unterbrechen, wenn bestimmt wird, dass der Unterschied zwischen dem Maximum- und Minimumwert zu klein ist (S506).

23. Vorrichtung nach einem der Ansprüche 16 bis 22, zudem mit einer Korrektureinrichtung zur Korrektur (S208) der Neigung des Eingabebildes gemäß dem gewonnenen Neigungswinkel.

24. Vorrichtung nach Anspruch 23 mit einer Anzeigeeinrichtung (105) zur Anzeige des korrigierten Bildes.

25. Vorrichtung nach Anspruch 23 mit einer Druckeinrichtung (109) zum Drucken des korrigierten Bildes.

26. Vorrichtung nach Anspruch 23, mit einer elektronischen Archivierungseinrichtung zur Speicherung der korrigierten Bilddaten.

27. Vorrichtung nach Anspruch 23, mit einer Erkennungseinrichtung zum Anwenden einer Erkennungsverarbeitung auf das korrigierte Bild.

28. Vorrichtung nach Anspruch 23, wobei die Korrektureinrichtung umfasst,
eine Entscheidungseinrichtung zur Entscheidung (S701) einer Teilungsbreite des Bildes gemäß dem erfassten Neigungswinkel (θ),
eine Teilungseinrichtung zur Teilung (S702) des Bildes in eine Vielzahl von Abschnitten, die in einer der horizontalen oder der vertikalen Richtung die entschiedene Teilungsbreite aufweisen, und
eine Erzeugungseinrichtung zur Erzeugung des korrigierten Bildes durch Wiederverbinden der Abschnitte des Bildes derart, dass die Abschnitte in die andere der horizontalen oder der vertikalen Richtung verschoben werden.

29. Vorrichtung nach Anspruch 28, wobei:
die Teilungseinrichtung betreibbar ist, um das Bild in sowohl der horizontalen als auch der vertikalen Richtung zu teilen, und wobei die Erzeugungseinrichtung betreibbar ist, um die Abschnitte zu verschieben, was sowohl in der horizontalen als auch in der vertikalen Richtung ausgeführt wird.

30. Vorrichtung nach Anspruch 28 oder Anspruch 29, bei der die Entscheidungseinrichtung die Breite als 1/tanθ - Bildelemente zu sein entscheidet und die Erzeugungseinrichtung das korrigierte Bild mit den benachbarten Abschnitten erzeugt, die relativ zueinander um 1 Bildelement verschoben werden.

31. Speichermedium, das ein Programm speichert, das eine Verarbeitungseinrichtung anweist, jeden der Schritte des Verfahrens nach einem der Ansprüche 1 bis 15 auszuführen.

32. Computerprogramm, das eine Verarbeitungseinrichtung anweist, jeden der Schritte des Verfahrens nach einem der Ansprüche 1 bis 15 auszuführen.

## Revendications

1. Procédé de traitement d'image dans lequel les étapes exécutées par un appareil de traitement d'image comprennent :
la définition (S503) de deux zones d'image partielles (607, 608) dans une image d'entrée, de telle sorte que les zones d'images partielles sont espacées dans la direction horizontale par un intervalle (d) ;
**caractérisé par** :
la détection de la valeur du décalage vertical (t) de l'une des zones d'images partielles (608) par rapport à l'autre (607) pour lequel une corrélation des projections horizontales respectives des pixels situés à l'intérieur des zones d'images partielles respectives est maximale, la corrélation indiquant le degré de coïncidence des projections horizontales respectives et chaque projection horizontale indiquant les positions verticales à l'intérieur de la zone d'image partielle pour lesquelles il existe des pixels noirs ; et
l'obtention (S507) d'un angle de basculement (θ) de ladite image d'entrée en fonction de la valeur du décalage et de l'intervalle.

2. Procédé de traitement d'image dans lequel les étapes exécutées par un appareil de traitement d'image comprennent :
la définition (S503) de deux zones d'image partielles (607, 608) dans une image d'entrée, de telle sorte que les zones d'images partielles sont espacées dans la direction verticale par un intervalle (d) ;
**caractérisé par** :
la détection de la valeur du décalage horizontal (t) de l'une des zones d'images partielles (608) par rapport à l'autre (607) pour lequel une corrélation des projections verticales respectives des pixels situés à l'intérieur des zones d'images partielles respectives est maximale, la corrélation indiquant le degré de coïncidence des projections verticales respectives et chaque projection horizontale indiquant les positions horizontales à l'intérieur de la zone d'image partielle pour lesquelles il existe des pixels noirs ; et
l'obtention (S507) d'un angle de basculement (θ) de ladite image d'entrée en fonction de la valeur du décalage et de l'intervalle.

3. Procédé selon l'une quelconque des revendications précédentes, dans lequel ladite étape de définition définit des zones d'images partielles pour une pluralité d'emplacements respectifs dans l'image d'entrée, ladite étape de détection détecte la valeur de décalage pour chaque paire des zones d'images partielles définies et ladite étape d'obtention obtient l'angle de basculement pour chaque paire des zones d'images partielles définies.

4. Procédé selon la revendication 3, comprenant en outre l'étape de détermination (S511) de la valeur du basculement en fonction des angles de basculement obtenus.

5. Procédé selon l'une quelconque des revendications précédentes, dans lequel la corrélation des projections des zones d'images partielles est fixée pour des valeurs de décalage situées à l'intérieur d'une plage prédéterminée (603).

6. Procédé selon l'une quelconque des revendications précédentes, comportant l'étape d'estimation (S504) du fait que l'importance de la projection d'au moins l'une des zones d'images partielles est suffisante, et d'interruption de l'étape de détection et de l'étape d'obtention si l'importance de la projection est estimée ne pas être suffisante.

7. Procédé selon l'une quelconque des revendications précédentes, dans lequel une valeur maximale et une valeur minimale de la corrélation desdites projections sont obtenues (S505) et lorsque la différence entre lesdites valeurs maximale et minimale est déterminée (S506) comme étant trop petite, l'étape d'obtention est interrompue.

8. Procédé selon l'une quelconque des revendications précédentes, comprenant en outre l'étape de correction (S208) du basculement de ladite image d'entrée en fonction dudit angle de basculement obtenu.

9. Procédé selon la revendication 8, dans lequel ladite image corrigée est affichée sur un moyen d'affichage (105).

10. Procédé selon la revendication 8, dans lequel lesdites données d'image corrigée sont imprimées par un moyen d'impression (109).

11. Procédé selon la revendication 8, dans lequel lesdites données d'image corrigée sont écrites dans un fichier électronique.

12. Procédé selon la revendication 8, comportant l'étape d'application du traitement de reconnaissance à l'image corrigée.

13. Procédé selon la revendication 8, dans lequel ladite étape de correction comprend,
la décision (S701) d'une largeur de division de l'image en fonction dudit angle de basculement détecté (θ),
la division (S702) de ladite image en une pluralité de parties ayant ladite largeur de division décidée dans l'une des directions horizontale et verticale, et
la formation (S703) de l'image corrigée par recombinaison des parties de l'image, de telle sorte que les parties sont décalées dans l'une ou l'autre des directions horizontale et verticale.

14. Procédé selon la revendication 13, dans lequel :
l'étape de division de ladite image en lesdites parties comprend la division de l'image dans chacune des directions horizontale et verticale et dans lequel, lors de l'étape de formation,
le décalage des parties est exécuté à la fois dans les directions horizontale et verticale.

15. Procédé selon la revendication 13 ou la revendication 14, dans lequel la largeur de division est de 1/tan θ pixels et lesdites parties adjacentes sont décalées les unes par rapport aux autres de 1 pixel.

16. Appareil de traitement d'image (101-110) comprenant :
un moyen (101) pour définir (S503) deux zones d'images partielles (607, 608) dans une image d'entrée, de telle sorte que les zones d'images partielles sont espacées dans la direction horizontale par un intervalle (d) ;
**caractérisé par** :
un moyen de détection pour détecter la valeur du décalage vertical (t) de l'une des zones d'images partielles (608) par rapport à l'autre (607) pour lequel une corrélation des projections horizontales respectives des pixels situés à l'intérieur des zones d'images partielles respectives est maximale, la corrélation indiquant le degré de coïncidence des projections horizontales respectives et chaque projection horizontale indiquant les positions verticales à l'intérieur de la zone d'image partielle pour lesquelles il existe des pixels noirs ; et
un moyen d'obtention pour obtenir (S507) un angle de basculement (θ) de ladite image d'entrée en fonction de la valeur du décalage et de l'intervalle.

17. Appareil de traitement d'image (101-110) comprenant :
un moyen (101) pour définir (S503) deux zones d'images partielles (607, 608) dans une image d'entrée, de telle sorte que les zones d'images partielles sont espacées dans la direction verticale par un intervalle (d) ;
**caractérisé par** :
un moyen de détection pour détecter la valeur du décalage horizontal (t) de l'une des zones d'images partielles (608) par rapport à l'autre (607) pour lequel une corrélation des projections verticales respectives des pixels situés à l'intérieur des zones d'images partielles respectives est maximale, la corrélation indiquant le degré de coïncidence des projections verticales respectives et chaque projection verticale indiquant les positions horizontales à l'intérieur de la zone d'image partielle pour lesquelles il existe des pixels noirs ; et
un moyen d'obtention pour obtenir (S507) un angle de basculement (θ) de ladite image d'entrée en fonction de la valeur du décalage et de l'intervalle.

18. Appareil selon les revendications 16 ou 17, dans lequel ledit moyen de définition peut être actionné pour définir des zones d'images partielles pour une pluralité d'emplacements respectifs dans l'image d'entrée, ledit moyen de détection pouvant être actionné pour détecter la valeur de décalage pour chaque paire des zones d'images partielles définies et ledit moyen d'obtention pouvant être actionné pour obtenir l'angle de basculement pour chaque paire des zones d'images partielles définies.

19. Appareil selon la revendication 18, comprenant en outre un moyen de détermination (S511) de la valeur du basculement en fonction des angles de basculement obtenus.

20. Appareil selon l'une quelconque des revendications 16 à 19, comprenant un moyen pour fixer une plage prédéterminée (603) de valeurs de décalage à l'intérieur de laquelle la corrélation des projections des zones d'images partielles est déterminée.

21. Appareil selon l'une quelconque des revendications 16 à 20, comportant un moyen d'estimation pour estimer (S504) si l'importance de la projection d'au moins l'une des zones d'images partielles est suffisante, et un moyen d'interruption pour interrompre le fonctionnement du moyen de détection et du moyen d'obtention si l'importance de la projection est estimée ne pas être suffisante.

22. Appareil selon l'une quelconque des revendications 16 à 21, dans lequel le moyen d'interruption peut être actionné pour obtenir une valeur maximale et une valeur minimale de la corrélation desdites projections et pour interrompre l'obtention de l'angle de basculement lorsque la différence entre lesdites valeurs maximale et minimale est déterminée (S506) comme étant trop petite.

23. Appareil selon l'une quelconque des revendications 16 à 22, comprenant en outre un moyen de correction pour corriger (S208) le basculement de ladite image d'entrée en fonction dudit angle de basculement obtenu.

24. Appareil selon la revendication 23, comprenant un moyen d'affichage (105) pour afficher l'image corrigée.

25. Appareil selon la revendication 23, comprenant un moyen d'impression (109) pour imprimer l'image corrigée.

26. Appareil selon la revendication 23, comprenant un moyen de chargement électronique pour mémoriser les données d'image corrigée.

27. Appareil selon la revendication 23, comportant un moyen de reconnaissance pour appliquer un traitement de reconnaissance à l'image corrigée.

28. Appareil selon la revendication 23, dans lequel ledit moyen de correction comprend,
un moyen de décision pour décider (S701) une largeur de division de l'image en fonction dudit angle de basculement détecté (θ),
un moyen de division pour diviser (S702) ladite image en une pluralité de parties ayant ladite largeur de division décidée dans l'une des directions horizontale et verticale,
un moyen de formation pour former l'image corrigée par recombinaison des parties de l'image, de telle sorte que les parties sont décalées dans l'une ou l'autre des directions horizontale et verticale.

29. Appareil selon la revendication 28, dans lequel :
le moyen de division peut être actionné pour diviser l'image dans chacune des directions horizontale et verticale et dans lequel le moyen de formation peut être actionné pour décaler les parties à la fois dans les directions horizontale et verticale.

30. Appareil selon la revendication 28 ou la revendication 29, dans lequel le moyen de décision décide que la largeur est de 1/tan θ pixels et le moyen de formation forme l'image corrigée avec lesdites parties adjacentes décalées les unes par rapport aux autres de 1 pixel.

31. Support de stockage contenant un programme qui ordonne à un processeur d'exécuter chacune des étapes du procédé revendiqué selon l'une quelconque des revendications 1 à 15.

32. Programme informatique ordonnant à un processeur d'exécuter chacune des étapes du procédé revendiqué selon l'une quelconque des revendications 1 à 15.
